# EUROPÄISCHE PATENTSCHRIFT

(11) **EP 0 635 106 B1**
(45) Veröffentlichungstag und Bekanntmachung des Hinweises auf die Patenterteilung: **13.03.1996**
(21) Anmeldenummer: 93907802.8
(22) Anmeldetag: 08.04.1993
(51) Int. Cl.: F16C 33/20

(54) **VERFAHREN ZUR HERSTELLUNG EINES HÜLSENFÖRMIGEN GLEITLAGERS UND NACH DIESEM VERFAHREN HERGESTELLTES GLEITLAGER**
METHOD OF PRODUCING A SLEEVE-SHAPED FRICTION BEARING, AND FRICTION BEARING PRODUCED BY THIS METHOD
PROCEDE DE FABRICATION D'UN PALIER LISSE SE PRESENTANT SOUS FORME DE DOUILLE ET PALIER LISSE REALISE SELON LEDIT PROCEDE

(30) Priorität: 09.04.1992 DE 4211917
(43) Veröffentlichungstag der Anmeldung: 25.01.1995
(73) Patentinhaber: neo-plastic Dr. Doetsch Diespeck GmbH, D-91456 Diespeck (DE)
(72) Erfinder: Rabe, Thore, D-91315 Höchstadt (DE)
(74) Vertreter: Hufnagel, Walter, Dipl.-Ing., Dipl.-Wirtsch.-Ing.
(86) Internationale Anmeldenummer: DE9300337
(87) Internationale Veröffentlichungsnummer: WO9321450

(56) Entgegenhaltungen:
- FR-A- 1 449 103
- GB-A- 2 079 867
- US-A- 3 008 779
- US-A- 3 400 988
- US-A- 3 909 087
- US-A- 4 084 863
- US-A- 4 509 870

## Beschreibung

Die vorliegende Erfindung bezieht sich auf ein Verfahren zur Herstellung eines hülsenförmigen Gleitlagers gemäß dem Oberbegriff des Anspruches 1 und auf ein nach diesem Verfahren hergestelltes Gleitlager.

Ein derartiges Gleitlager ist aus der US-A- 3,008,779 bekannt. Der röhrenförmige Träger besteht dort aus einer längsgeschlitzten Metallhülse, in die die Gleitschicht in Form einer dünnen Schicht aus Polyamid oder aus einem anderen synthetischen Kunststoff mit günstigen Gleiteigenschaften eingeformt ist. Bei der Herstellung derartiger Gleitlager muß ein sehr dünner Spalt zwischen der Metallhülse und dem Spritzdorn von der Stirnseite her mit dem die Gleitschicht bildenden Kunststoff gefüllt werden. Die Herstellung sehr dünner Gleitschichten ist hierbei besonders bei in axialer Richtung längeren Gleitlagern begrenzt. Besonders nachteilig ist, daß die eingespritzte dünne Gleitlagerschicht beim Erkalten sich von der koaxialen Metallhülse durch den materialbedingten Schwund von der Metallhülse ablöst. Durch das freie Wegschwinden der Gleitlagerschicht ist auch der Innendurchmesser der Gleitlagerschicht nicht ausreichend genau bestimmbar.

Ein ähnliches Gleitlager ist auch aus der DE-B-1,114,631 bekannt. Dort ist zur Herstellung des Lagergehäuses aus hartem Polyurethan ein erster Kern mit einem zylindrischen Paßstück vorgesehen. Zur Herstellung der Gleitschicht aus weicherem Polyurethan ist ein zweiter Kern mit geringerem Außendurchmesser und einem ebenfalls zylindrischen Paßstück vorgesehen. Auch bei diesem vorbekannten Gleitlager läßt sich das freie Wegschwinden der inneren Gleitlagerschicht nicht vermeiden, so daß sich enge Toleranzen für ein Präsisionsgleitlager nicht einhalten lassen.

Bei dem aus der US-A-3,400,988 bekannten Verfahren zur Herstellung eines vorbeschriebenen Gleitlagers wird zunächst die Gleitschicht auf einem das Endmaß bestimmenden Kern durch einen Spritzvorgang hergestellt. Anschließend wird die auf dem Kern befindliche Gleitschicht mit einem Träger aus polymerem Material umspritzt, dessen Formgebungstemperatur niedriger ist als die die Gleitschicht zerstörende Temperatur. Auf diese Art können in einfacher Weise auch hülsenförmige Gleitschichten hergestellt werden. Um hierbei eine Verankerung der Gleitschicht mit dem Träger zu gewährleisten, besitzt die Gleitschicht auf ihrer Außenfläche eine im Vergleich zu ihrer Wandstärke relativ flache Längsnut. Diese Längsnut wird beim Umformen mit dem Trägermaterial ausgefüllt. Anstelle der Längsnut können auch miteinander korrespondierende, radial verlaufende Bohrungen in der Gleitschicht und im Träger vorgesehen sein. Die Verankerung dieser beiden Teile erfolgt durch einen die Bohrungen durchsetzenden Stift. Über die Paßgenauigkeit des Endmaßes der Gleitlagerbohrung ist hierbei nichts ausgesagt.

Bei dem aus der US-A-4,509,870 bekannten hülsenförmigen Gleitlager ist zur festen Verankerung von Gleitschicht und Träger die Außenfläche der Gleitschicht mit nach außen überstehenden Erhöhungen versehen, die in das Trägermaterial eingreifen.

Weiterhin ist aus der FR-A-1,449,103 ein hülsenförmiges Gleitlager bekannt, dessen Gleitschicht einen durchgehenden, nicht gefüllten Längsschlitz oder auf der Innenseite eine offene Dehnungsnut aufweist. Hierdurch sollen Temperatur- und Umgebungseinflüsse ausgeglichen werden können. Ein ähnliches Gleitlager ist auch aus der US-A-3,008,779 bekannt, wobei der Träger aus Stahl einen Ausgleichsschlitz besitzt.

Der vorliegenden Erfindung liegt demgegenüber die Aufgabe zugrunde, ein nach dem aus der US-A-3,400,988 bekannten Verfahren hergestelltes hülsenförmiges Gleitlager kostengünstig und in einfacher Weise umweltfreundlich herzustellen, dabei aber gleichzeitig ein Lagerendmaß der Lagerbohrung mit höchstmöglicher Präzision zu erhalten.

Gelöst wird diese Aufgabe durch die im Anspruch 1 angegebenen Verfahrensschritte.

Mit der vorliegenden Erfindung wird das Lagerendmaß beim Formfüllvorgang mit dem Trägermaterial mit hoher Präzision festgelegt. Dies wird dadurch erreicht, daß der Längsschlitz bzw. die Trennfuge beim Formfüllvorgang ausgefüllt wird und das darin erstarrte Trägermaterial einen formstabilen Abstandshalter zwischen den Flanken des Längsschlitzes bzw. der Trennfuge bildet.

Bei Anwendung mehrerer Längsschlitze können zwischen den gebildeten Gleitschicht-Schalenteilen diese verbindende Stege stehenbleiben, um ein zusammenhängendes Gleitschichtelement zu erhalten. Hierbei - sowie bei der alternativen Ausgestaltung mit wenigstens einer Trennfuge - bildet der jeweils verbleibende Steg ein Ausgleichselement bei der Ummantelung der Gleitschicht mit dem Trägermaterial. Dies ist vorteilhaft bei Verwendung der vorgefertigten Gleitschicht auf anderen das Endmaß bestimmenden Kernen als dem des Spritzdorns. Beispielsweise wird die vorgefertigte Gleitschicht beim Aufschieben auf einen Kern mit größerem Durchmesser als dem des Spritzdorns die Gleitschicht auf das notwendige Endmaß aufgeweitet und dann mit dem Trägermaterial umspritzt. Umgekehrt wird bei einem Kern mit kleinerem Durchmesser beim Umspritzen mit dem Trägermaterial die Gleitschicht auf das genaue Endmaß zusammengedrückt. In beiden Fällen ist das genaue Endmaß durch den mit dem Trägermaterial gefüllten Längsschlitz bzw. die ausgefüllte Trennfuge bleibend festgelegt.

Durch das unmittelbare Spritzgießen, Spritzpressen, Spritzblasen oder dgl. der polymeren Gleitschicht auf einen Kern kann der Materialanguß auch radial vorgenommen werden. Hierdurch ist es möglich, dünne bis sehr dünne Schichten bis zu 0,2 mm oder noch darunter auch bei axial langen Gleitlagern herzustellen. Dies führt zu einer erheblichen Kostensenkung durch die nur noch geringen Mengen des für die Gleitschicht erforderlichen, in der Regel sehr teueren polymeren Materials.

Die Herstellungstoleranz des Innendurchmessers des Gleitlagers ist durch geeignete Wahl des Kerndurchmessers mit Rücksicht auf das geringe Schrumpfmaß des dünnschichtigen Polymers einfach bestimmbar.

Da man bei der erfindungsgemäßen Herstellung des Gleitlagers üblicherweise mit einem einzigen Spritzkern auskommt, kann die Herstellung auf einer Vorrichtung mit Dreh- oder Schiebetischen mit zwei oder mehr Stationen praktisch in einem Arbeitsprozeß und ohne gesonderte Einlegearbeiten von Lagerteilen erfolgen.

Nach einer weiteren Ausführungsform der Erfindung ist für die Herstellung des äußeren Trägers der Einsatz eines zweiten Kerns mit gegenüber dem ersten Kern verändertem Außendurchmesser vorgesehen, falls die bereits gefertigte Gleitschicht nicht mit einem oder mehreren Trennschlitz(en), sondern mit einer oder mehreren Trennfuge(n) versehen und im Bereich dieser Trennfuge(n) ein oder mehrere verbleibende(r) Steg(e) als Schwimmhaut bzw. Schwimmhäute vorgesehen werden. Diese Ausführung bietet den weiteren Vorteil, daß das Material des füllstoffverstärkten Trägers nicht mit der Welle in Eingriff gelangt und die Dicke der verbleibenden Schwimmhaut bzw. der verbleibenden Schwimmhäute als Verschleißanzeige dienen kann bzw. dienen können.

Durch die Kalibrier- und Zentrierfunktion des Materials des Trägers bzw. der innersten Trägerschicht innerhalb des oder der Trennspalte(s) bzw. der Trennfuge(n) lassen sich sehr enge Toleranzen des Innendurchmessers der Gleitschicht im Bereich ≦ 60 µm erreichen.

Weitere Einzelheiten der Erfindung sind in den in der Zeichnung veranschaulichten Ausführungsbeispielen näher beschrieben. Es zeigen:
- **Fig. 1**: eine Stirnansicht eines Gleitlagers mit geschlossener Gleitschicht und mit radialen Angüssen,
- **Fig. 2**: eine Stirnansicht eines Gleitlagers gemäß der vorliegenden Erfindung mit geschlitzter Gleitschicht, jeweils im Schnitt,
- **Fig. 3 und 4**: je eine gleiche Ansicht von Gleitlagern mit einem mehrschichtigen Träger,
- **Fig. 5 bis 7**: je eine Draufsicht auf eine geschlitzte Gleitschicht,
- **Fig. 8 bis 11**: Ausführungen von Gleitschichten mit an der Außenfläche vorgesehenen Formgebungen zum Erreichen eines günstigen Formschlusses zwischen der Gleitschicht und dem Träger,
- **Fig.12 und 13**: je eine Ansicht eines Gleitlagers im Längsschnitt,
- **Fig.14**: die Ansicht eines weiteren Gleitlagers im Längsschnitt und die
- **Fig.15 und 16**: Teilquerschnitte von Gleitlagern mit einem oder mehreren durchgehenden Trennschlitzen bzw. mit einem oder mehreren nicht durchgehenden Trennfugen.

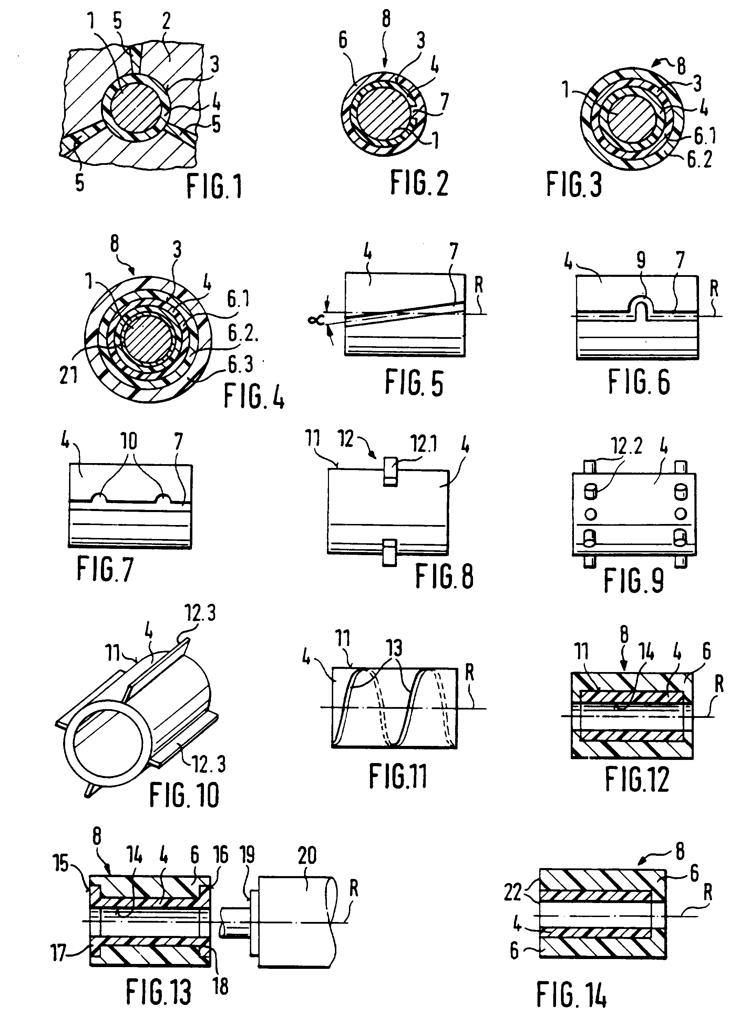

In den Fig. 1 bis 4 ist jeweils mit 1 ein Spritzkern bezeichnet. Dieser ist von einem ein- oder mehrteiligen axial und/oder radial verschiebbaren Formwerkzeug 2 umgeben. Bei geschlossenem Formwerkzeug 2 wird ein Formhohlraum 3 für die Erzeugung einer hülsenförmigen oder röhrenförmigen Gleitschicht 4 gebildet. Im Formwerkzeug 2 sind bevorzugt radiale Angußkanäle 5 vorgesehen.

Der Formhohlraum 3 ist derart gestaltet,daß die Dicke der Gleitschicht 4 etwa 0,2 mm bis 3 mm, insbesondere etwa 0,3 mm bis 2 mm, beträgt. In dem Formhohlraum 3 wird in an sich bekannter Weise im Spritzgieß-, Spritzpreß- oder Spritzblasverfahren ein thermoplastisch oder duroplastisch verformbarer Kunststoff mit guten Gleiteigenschaften eingebracht der dort erstarrt oder auspolymerisiert.

Die Gleitschicht 4 wird bevorzugt aus wenigstens einem der Polymere, wie Polyethersulfon, Polyetherketon, Polyamidimid oder Polyetherimid hergestellt. Die Gleitschicht 4 kann gleitbegünstigende Füllstoffe in Partikel-, Faser- oder Kugelform enthalten, jedoch dürfen derartige Füllstoffe keine abrasiven Eigenschaften besitzen.

Nach dem Auspolymerisieren oder dem Erstarren des Materials der Gleitschicht 4 wird diese noch auf dem Kern 1 befindliche Gleitschicht 4 mit einem Träger 6 aus einem harten oder weichelastischen Polymer umhüllt. Dies geschieht nach einem der in der Kunststofftechnik bekannten Formverfahren. Der Prozeß wird hierbei beispielsweise durch Anwendung geeigneter Temperatur und Formdrücke (Werkzeug-Innendrücke) derart geführt und/oder die konstruktive Ausgestaltung des Gleitlagers 8 wird derart gewählt, daß ein stoffschlüssiger und/oder formschlüssiger Verbund zwischen der Gleitschicht 4 und dem Träger 6 erreicht wird.

Nach dem Auspolymerisieren oder dem Erstarren des Trägermaterials wird das ummantelte Gleitlager 8 vom Kern 1 abgeschoben oder abgezogen und anschließend ausgeworfen. Auf diese Weise kann ein Gleitlager 8 mit einer extrem dünnen Gleitschicht 4 auf einfache Weise, beispielsweise mittels Formmaschinen mit zwei oder mehr Stationen, hergestellt werden.

Bei der Herstellung eines Trägers 6 aus hartem Material finden bevorzugt Polymere, wie beispielsweise Polybutylenterephtalat (PBTP), Polyethylenterephtalat (PETP),Polyoximethylen (POM), Polyamid, beispielsweise der Handelsbezeichnung PA 6 oder PA 66, sowie andere geeignete Polymere Anwendung. Der Träger 6 bildet eine hochtragende und ggf. auch hochverstärkte, sehr feste Schicht. Zur Verstärkung können mineralische organische oder anorganische Füllstoffe in Partikel-, Kugel- oder Faserform, gegebenenfalls auch miteinander gemischt, verwendet werden. Als Füllmaterial eignen sich beispielsweise Glasfasern oder Fasern aus ähnlichen mineralischen Stoffen oder Verbindungen. Bevorzugt können auch Mikroglaskugeln mit einer Größe von etwa 10 µm bis 100 µm verwendet werden. Auch sind partikelförmige Füllstoffe aus mineralischen, organischen oder anorganischen Stoffen grundsätzlich einsetzbar.

Günstig ist es, wenn für den Träger 6 oder zumindest für die oder für eine der aus hartem Polymer bestehenden Trägerzwischenschichten 6.1, 6.2 oder 6.3 ein Material verwendet wird, das mit einem etwa 5 % bis 80 % faserigen und/oder partikelförmigen und/oder kugelförmigen mineralischen, organischen oder anorganischen Füllstoffanteil versehen ist.

Zur Lärm- oder Vibrationsdämpfung kann es vorteilhaft sein, als Träger 6 oder als eine oder mehrere der Trägerzwischenschichten 6.1, 6.2 oder 6.3 ein weichelastisches polymeres Material zu verwenden, beispielsweise auf der Basis elastomerer Polymere, wie thermoplastische Elastomere (TPE), oder Nitrilbutadienkautschuk (NBR) oder Acrylatkautschuk (ACM) oder Silikonkautschuk (FKM).

Die Gleitschicht 4 weist zumindest einen, bevorzugt mehrere durchgehende Längsschlitz(e) 7 auf, der bzw. die mit Trägermaterial der darüberliegenden Trägerschicht gefüllt wird bzw. werden, wie in Fig. 2 dargestellt ist. Der bzw. die Längsschlitz(e) 7 sind zur Rotationsachse (R) spitzwinklig angeordnet, vorzugsweise unter einem Winkel α zwischen 5° und 30°.

Der Träger 6 kann auch aus zwei oder mehr Schichten von abwechselnd hartem und weichelastischem Material oder umgekehrt bestehen. Hierdurch erhält man ein Gleitlager 8 mit sowohl guter Formbeständigkeit als auch mit hoher Belastbarkeit, sowie mit guten Dämpfungseigenschaften. Ein derartiger Zweischicht-Träger 6 ist in Fig. 3 dargestellt, wobei die innere Schicht 6.1 aus hartem bzw. weichelastischem und die äußere Schicht 6.2 aus weichelastischem bzw. hartem Material besteht. Die Prozeßführung wird wieder so gewählt, daß eine stoffschlüssige und/oder formschlüssige Verbindung der Träger-Teilschichten 6.1 und 6.2 eintritt.

Die Fig. 4 zeigt ein Gleitlager 8 mit einem Dreischicht-Träger 6 mit abwechselnd hartem, weichelastischem oder hartem Material oder mit abwechselnd weichelastischem, hartem oder weichelastischem Material 6.1, 6.2, 6.3. Diese Mehrfachschichtsysteme können in einfacher Weise auf Mehrstationen-Formmaschinen mit Dreh- oder Schiebetischen hergestellt werden.

Bei geschlitzter Gleitschicht 4 kann der Längsschlitz 7 - wie bereits erwähnt - leicht geneigt zur Rotationsachse R einer zu lagernden Welle oder Achse verlaufen, wie anhand der Draufsicht auf die Gleitschicht 4 in Fig. 5 veranschaulicht ist. Der Längsschlitz 7 kann gemäß Fig. 6 mit axialen, beispielsweise bogenförmigen Versetzungen 9 oder gemäß Fig. 7 mit tangentialen Ansätzen 10 oder dgl. versehen sein.

An der Außenfläche 11 der Gleitschicht 4 können, wie in den Fig. 8 und 9 dargestellt, Anformungen 12 in Form von Flanschringen oder Ringabschnitten 12.1 (Fig. 8) oder in Form von Zapfen oder Stegen 12.2 (Fig. 9) oder in Form von Rippen, beispielsweise Längsrippen 12.3 (Fig. 10), angeformt sein, die eine gute Formschlüssigkeit gewährleisten.

Zusätzlich oder anstelle der Anformungen 12 können Einformungen 13, beispielsweise in Form von Rillen oder Nuten in Ring-, Spiral- oder sonstiger Form vorgesehen sein, wie in Fig. 11 veranschaulicht. Es kann auch eine Riffelung oder Rändelung oder es können sonstige Vertiefungen vorgesehen sein.

Die Gleitschicht 4 kann vorteilhaft, wie Fig. 12 zeigt, bis auf ihre der Rotationsachse R zugewandte Gleitfläche 14 vom Material des Trägers 6 umformt sein.

Gemäß einer vorteilhaften Ausgestaltung der Erfindung kann die Gleitschicht 4 an wenigstens einer Stirnseite 15 und/oder 16 einen radial nach außen abstehenden, angeformten Flansch 17 bzw. 18 aufweisen, der außen an der Stirnseite nicht vom Material des Trägers 6 umformt wird. Hierdurch erhält man an der bzw. an den Stirnseite(n)15 und/oder 16 eine Gleitfläche, an der beispielsweise eine Stützfläche 19 einer mit einem Bund versehenen Welle oder Achse 20 gleitend anliegen kann.

Nach einer weiteren Ausführungsform können die Gleitschicht 4 und der Träger 6 oder die Trägerzwischenschichten 6.1, 6.2, 6.3 einander so zugeordnet werden, daß sie zumindest an einer Stirnseite 22 bündig abschließen, wie Fig. 14 zeigt.

Die Ausführungsformen der Fig. 12 bis 14 können beliebig miteinander kombiniert werden.

Besonders vorteilhaft kann es für eine optimale Schmierung des Gleitlagers 8 sein, wenn als die Gleitschicht 4 koaxial umgebender Träger 6 oder als die Gleitschicht 4 zumindest teilflächig unmittelbar berührende Trägerzwischenschicht 6.1, 6.2, 6.3 eine solche aus schmiermittelhaltigen oder schmiermittelführenden polymeren Werkstoffen verwendet wird. Auch kann es günstig sein, wenn der schmiermittelführende Träger 6 oder eine der Trägerzwischenschichten 6.1, 6.2, 6.3 von außen nachschmierbar ist bzw. sind.

Die Ölabgabe zur Gleitlagerwelle erfolgt bevorzugt über den Spalt 7. Derartige Spalte 7 sind zeichnerisch in verschiedenen Ausführungsvarianten dargestellt. Die Kontaktmöglichkeit mit der ölführenden Schicht ist aber auch durch die stirnseitig zur Rotationsachse vorgezogenen Endbereiche der Trägerschicht 6 bzw. der Trägerzwischenschichten 6.1, 6.2, 6.3 möglich, wie dies in den Fig. 12 und 14 dargestellt ist.

Zur besseren Entformbarkeit des Gleitlagers auf dem Kern 1 vor dem Aufbringen der Gleitschicht 4 ist es günstig, eine Trennschicht 21 (Fig. 4) anzubringen. Diese Trennschicht 21 kann ein an sich bekanntes Trennmittel, beispielsweise auf Wachs- oder Silikonbasis oder eine aufgedampfte Schicht aus einem geeigneten Metallkarbid oder Metallnitrid, wie Titankarbid (TiC) oder Titannitrid (TiN), sein.

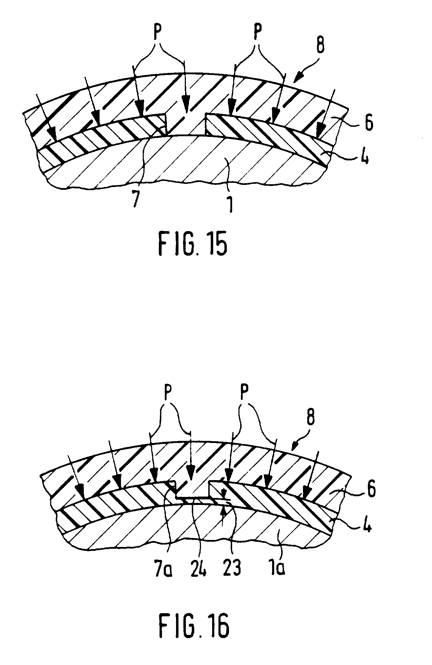

Figur 15 zeigt einen Teilquerschnitt durch ein erfindungsgemäß hergestelltes Gleitlager 8 mit einer oder mit mehreren durchgehenden Trennschlitzen 7 in der Gleitschicht 4. Der oder die Trennschlitz(e) 7 ist bzw. sind mit dem Material des Trägers 6 bzw. der innersten Schicht mehrerer Trägerschichten vollständig ausgefüllt. Die mit den Pfeilen P angedeuteten Schwindungskräfte verdeutlichen die einwirkenden Kräfte des Materials des Trägers 6 bzw. eventuell vorhandener mehrerer Trägerschichten auf die Gleitschicht 4. Nach dem Erkalten des Trägers 6 in den formstabilen Zustand in dem bzw. in den Trennschlitz(en) 7 ist eine Veränderung des Innendurchmessers der Gleitschicht 4 durch weitere Schwindungskräfte des Materials des Trägers 6 nicht mehr möglich. Damit werden bei Verwendung nur eines einzigen Kernes 1 Gleitlager 8 mit größter Präzision, d.h. mit sehr engen Toleranzen des Innendurchmessers der Gleitschicht 4 im Bereich ≦ 60 µm erhalten.

Bei dieser Ausführung der vorliegenden Erfindung zentriert und kalibriert das Material des Trägers 6 bzw. der innersten Schicht eventuell vorhandener mehrerer Trägerschichten die Breite des bzw. der Spalte(s) 7 und damit den Innendurchmesser der Gleitschicht 4. Die Breite des bzw. der Spalte 7 beträgt vorzugsweise zwischen 0,3 mm bis 3,0 mm.

Die Figur 16 zeigt einen Teilquerschnitt einer Ausführungsvariante eines erfindungsgemäß hergestellten Gleitlagers 8. Bei dieser Ausführung ist die Gleitschicht 4 nicht mit durchgehenden Trennschlitzen, sondern lediglich mit einer oder mit mehreren Trennfuge(n) 7a versehen, die wiederum mit dem Material des Trägers 6 oder mit dem Material einer der Trägerschichten ausgefüllt wird bzw. werden.

Der oder die an der oder an den Trennfuge(n) 7a verbleibende(n) Steg(e) 23 ist bzw. sind als Schwimmhaut 24 ausgebildet. Die Dicke dieser Schwimmhaut bzw. Schwimmhäute 24 ist geringer als ein Millimeter, bevorzugt geringer als 0,5 mm. Damit wird bzw. werden eine bzw. mehrere Dehnfuge(n) geschaffen, mit denen der Innendurchmesser der Gleitschicht 4 entsprechend dem Außendurchmesser eines zweiten Kernes 1a entsprechend eingestellt werden kann. Bei der Herstellung des Trägers 6 bzw. der innersten Schicht mehrerer Trägerschichten wird bzw. werden diese Trennfuge(n) 7a mit dem Material des Trägers 6 bzw. entsprechender Trägerschichten ausgefüllt, so daß auch in diesem Falle das Material des Trägers 6 bzw. der Trägerschichten als Kalibrierung und Zentrierung dient, so daß nach dem Erkalten des Trägers 6 bzw. der innersten Trägerschicht in den formstabilen Zustand eine Veränderung des Innendurchmessers der Gleitschicht 4 nicht mehr möglich ist.

Auch bei dieser Ausführungsvariante der vorliegenden Erfindung kann die Trennfuge 7a bzw. können die Trennfugen 7a geneigt zur Rotationsachse R der zu lagernden Welle verlaufen, insbesondere unter einem Winkel zwischen 5° und 30°.

Auch wenn bei dieser Ausführungsvariante der vorliegenden Erfindung zwei Kerne 1, la mit unterschiedlichen Kerndurchmessern benötigt werden, wobei der Kerndurchmesser la kleiner oder größer als der Kerndurchmesser 1 sein kann, zeichnet sich diese Ausführungsform durch die zusätzlichen Vorteile aus, daß das füllstoffverstärkte Material des Trägers 6 bzw. eventueller mehrerer Trägerschichten mit der Welle nicht in Eingriff kommt und daß die nach längerem Gebrauch verbleibende Dicke der Schwimmhaut bzw. Schwimmhäute 24 als Verschleißanzeige dienen kann. Da das Material der Gleitschicht 4 und das des Trägers 6 nicht nur aus unterschiedlichen Polymeren bestehen, sondern bevorzugt auch unterschiedliche Farben aufweisen, kann das Durchscheinen des Materials des Trägers 6 durch die Schwimmhaut bzw. Schwimmhäute 24 bzw. dessen Freilegen nach der Abtragung der Schwimmhaut bzw. der Schwimmhäute 24 als Verschleißanzeige dienen.

Es kann vorteilhaft sein, bei der Herstellung der Gleitschicht 4 aus vorwiegend thermoplastischen Materialien den Kern 1 stark bis extrem stark zu kühlen. Beispielsweise kann zum Kühlen flüssiger Stickstoff verwendet werden. Durch die Kühlung, insbesondere durch eine extreme Kühlung von beispielsweise unter -100°C kann die Molekularstruktur des für die Gleitschicht 4 verwendeten Materials günstig beeinflußt werden. Beispielsweise erhält man dadurch eine mehr kristalline und damit höher belastbare Struktur. Allerdings kann dies auf Kosten der Stoffschlüssigkeit mit dem Trägermaterial einhergehen, so daß in diesem Fall eine besonders gute Formschlüssigkeit zwischen der Gleitschicht 4 und dem Träger 6 angestrebt werden sollte.

Bei der Herstellung der Gleitschicht 4 aus vorwiegend duroplastischen Materialien kann der Kern 1 stark geheizt werden, beispielsweise in einem Temperaturbereich bis zu 200°C.

Unter harten Polymeren werden in dieser Anmeldung Polymere im Shore D-Bereich mit Härtegraden von 30 bis 90 Shore D verstanden.

Unter weichelastischen Polymeren werden in dieser Anmeldung Polymere im Shore A-Bereich mit Härtegraden von 40 bis 98 Shore A verstanden.

Das nach dem erfindungsgemäßen Verfahren hergestellte hülsenförmige Gleitlager 8 besitzt eine Gleitschicht 4 aus einem der polymeren Materialien Polyethersulfon, Polyetherketon, Polyamidimid oder Polyetherimid, wobei die Gleitschicht 4 bevorzugt aus einer Schichtdicke von etwa 0,2 mm bis zu etwa 3 mm besteht.

Mit Vorteil ist die Gleitschicht 4 von einem Träger 6 aus hartem, polymerem Material umgeben. Es kann aber auch die Gleitschicht 4 von einem Träger 6 aus weichelastischem,polymerem Material umgeben sein.

Mit besonderem Vorteil ist die Gleitschicht 4 von wenigstens zwei abwechselnd übereinander aufgebrachten Trägerzwischenschichten 6.1, 6.2 bzw. 6.1, 6.2, 6.3 aus abwechselnd harten oder weichelastischen Polymeren umgeben.

Derart ausgebildete hülsenförmige Gleitlager 8 zeichnen sich dadurch aus, daß das Trägermaterial aufgrund der außergewöhnlich dünnen Wandstärke der Gleitschicht 4 die Aufgabe übernehmen kann, Einbautoleranzen und Maßüberbrückungen auszugleichen bzw. vorzunehmen. Bei Verwendung von weichelastischen Trägermaterialien können Lagerschwingungen vermindert werden. Zusätzlich werden axiale Fluchtungsfehler durch die Elastizität des weichelastischen Trägermaterials ausgeglichen.

## Patentansprüche

1. Verfahren zur Herstellung eines hülsenförmigen Gleitlagers (8) mit einer zur Rotationsachse (R) weisenden Gleitfläche, einer aus einem polymeren, gute Gleiteigenschaften aufweisenden Material bestehenden, durch kunststofftechnische Verfahren hergestellten Gleitschicht (4) und einem diese Gleitschicht umgebenden Träger (6) aus ebenfalls polymerem Material, wobei die Gleitschicht (4) zum Träger (6) hin eine sich parallel zur Rotationsachse (R) erstreckende Vertiefung (7,7a) aufweist, die vom Trägermaterial ausgefüllt ist, gekennzeichnet durch die gemeinsame Anwendung folgender Verfahrensschritte:
- Herstellung einer inneren, dünnen Gleitschicht (4) aus einem ersten polymeren Material auf einem Kern (1) durch einen Spritzgieß-, Spritzpreß- oder Spritzblasprozeß;
- Verwendung eines Materials für die Gleitschicht (4) ohne Zusatz von faserigen, kugelförmigen und/oder partikelförmigen abrasiven Füllstoffen;
- Erzeugen wenigstens eines sich von einer Stirnseite zur anderen Stirnseite der Gleitschicht (4) erstreckenden Längsschlitzes (7) oder wenigstens einer Längstrennfuge (7a) unter Belassen eines elastischen Steges (23) in Form einer Haut (24) beim oder nach der Herstellung der Gleitschicht (4);
- Ummantelung der auf dem Kern (1) oder auf einem Kernteil (1a) befindlichen oder aufgebrachten inneren Gleitschicht (4) mit dem äußeren Träger (6) aus entweder hartem oder weichelastischem Polymer, wobei die Prozeßführung und/oder die Konstruktion der inneren Gleitschicht (4) und des äußeren Trägers (6) derart gewählt wird bzw. werden, daß sich die innere Gleitschicht (4) mit dem äußeren Träger (6) stoff- und/oder formschlüssig verbindet und wobei
- der oder die Längsschlitze (7) bzw. Längstrennfugen (7a) mit dem Material des Trägers (6) ausgefüllt wird bzw. werden;
- Abschieben des ummantelten und formstabilisierten Gleitlagers (8) vom Kern (1 bzw. la) und anschließendes Auswerfen desselben.

2. Verfahren nach Anspruch 1, dadurch gekennzeichnet, daß bei nur teilweiser Auftrennung der Gleitschicht (4) der oder die an der bzw. an den Trennfuge(n) (7a) verbleibende(n) Steg(e) als Schwimmhaut (24) ausgebildet wird bzw. werden.

3. Verfahren nach Anspruch 2, dadurch gekennzeichnet, daß die Dicke der Schwimmhaut bzw. der Schwimmhäute (24) geringer als ein Millimeter bemessen wird.

4. Verfahren nach Anspruch 1, dadurch gekennzeichnet, daß der oder die Trennschlitz(e) (7), ggf. auch die Trennfuge(n) (7a), zur Rotationsachse (R) spitzwinklig angeordnet wird bzw. werden.

5. Verfahren nach Anspruch 4, dadurch gekennzeichnet, daß der spitze Winkel (α) zwischen 5° und 30° bemessen wird.

6. Verfahren nach einem der Ansprüche 1 bis 5, dadurch gekennzeichnet, daß der Träger (6) aus wenigstens zwei abwechselnd übereinander aufgebrachten stoff- und/oder formschlüssig miteinander verbundenen Schichten (6.1; 6.2; 6.3;) aus abwechselnd hartem und weichelastischem Polymer bzw. umgekehrt ausgebildet wird.

7. Verfahren nach Anspruch 6, dadurch gekennzeichnet, daß die innerste Schicht (6.1) und die äußerste Schicht (6.2 bzw. 6.3) des Trägers (6) aus einem harten Polymer hergestellt wird.

8. Verfahren nach Anspruch 6, dadurch gekennzeichnet, daß die innerste Schicht (6.1) und die äußerste Schicht (6.2 bzw. 6.3) des Trägers (6) aus einem weichelastischen Polymer hergestellt wird.

9. Verfahren nach einem der Ansprüche 1 bis 8, dadurch gekennzeichnet, daß bei der Herstellung der Gleitschicht (4) an deren Außenfläche (11) An- und/oder Einformungen (12 bzw. 13) vorgesehen werden.

10. Verfahren nach einem der Ansprüche 1 bis 9, dadurch gekennzeichnet, daß die Gleitschicht (4) bis auf ihre der Rotationsachse (R) zugewandte Gleitfläche (14) vom Träger (6) umformt wird (Fig. 12).

11. Verfahren nach einem der Ansprüche 1 bis 9, dadurch gekennzeichnet, daß an zumindest einer Stirnseite (15 und/oder 16) der Gleitschicht (4) ein radial nach außen weisender Flansch (17 bzw. 18) angeformt wird, dessen bzw. deren axial nach außen weisende Fläche(n) vom Material des Trägers (6) nicht umformt wird bzw. werden (Fig. 13).

12. Verfahren nach einem der Ansprüche 1 bis 9, dadurch gekennzeichnet, daß der Träger (6) und die Gleitschicht (4) einander so zugeordnet werden, daß sie zumindest an einer Stirnseite (22) bündig miteinander abschließen (Fig. 14).

13. Verfahren nach einem der Ansprüche 1 bis 12, dadurch gekennzeichnet, daß für den Träger (6) oder zumindest für die oder für eine aus hartem Polymer bestehende Trägerzwischenschicht (6.1; 6.2; 6.3) ein Material, versehen mit einem etwa 5 % bis 80 % faserigen und/oder partikelförmigen und/oder kugelförmigen mineralischen, organischen oder anorganischen Füllstoffanteil, verwendet wird.

14. Verfahren nach einem der Ansprüche 1 bis 13, dadurch gekennzeichnet, daß als die Gleitschicht (4) koaxial umgebender Träger (6) oder als die Gleitschicht (4) zumindest teil flächig unmittelbar berührende Trägerzwischenschicht (6.1; 6.2; 6.3) eine solche aus schmiermittelhaltigen oder schmiermittelführenden polymeren Werkstoffen verwendet wird.

15. Verfahren nach Anspruch 14, dadurch gekennzeichnet, daß der schmiermittelführende Träger (6) oder eine der schmiermittelführenden Trägerzwischenschichten (6.1; 6.2; 6.3) von außen nachschmierbar ist bzw. sind.

16. Verfahren nach Anspruch 14 oder 15, dadurch gekennzeichnet, daß das Schmiermittel des schmiermittelführenden Trägers (6) oder der schmiermittelführenden Trägerzwischenschichten (6.1; 6.2; 6.3) durch den oder die Trennschlitz(e) (7) abgegeben wird.

17. Hülsenförmiges Gleitlager, hergestellt nach dem Verfahren nach einem oder mehreren der Ansprüche 1 bis 16, dadurch gekennzeichnet, daß die Gleitschicht (4) aus einem der polymeren Materialien Polyethersulfon, Polyetherketon, Polyamidimid oder Polyetherimid mit einer Schichtdicke bis zu etwa 3 mm besteht.

18. Hülsenförmiges Gleitlager nach Anspruch 17, dadurch gekennzeichnet, daß die Gleitschicht (4) von wenigstens zwei abwechselnd übereinander aufgebrachten Trägerzwischenschichten (6.1; 6.2; 6.3) aus abwechselnd harten oder weichelastischen Polymeren umgeben ist.

19. Hülsenförmiges Gleitlager nach Anspruch 17 oder 18, dadurch gekennzeichnet, daß die verbleibende Dicke der Schwimmhaut (24) oder das Nichtvorhandensein einer Schwimmhaut (24) als Verschleißanzeige dient.

## Claims

1. A method of production of a slide bearing (8) in the form of a sleeve and having a sliding face pointing at the axis (R) of rotation, a sliding layer (4) consisting of a polymeric material exhibiting good sliding properties, produced by methods in plastics technology, and a carrier (6) surrounding this sliding layer and likewise of polymeric material, the sliding layer (4) exhibiting towards the carrier (6) a depression (7, 7A) which extends in parallel with the axis (R) of rotation and is filled with the carrier material, characterized by the combined application of the following steps of the method:
- producing an inner thin sliding layer (4) of a first polymeric material on a core by a process of injection moulding, transfer moulding or injection blast;
- employing a material for the sliding layer (4) without addition of fibrous, spherical and/or particulate abrasive fillers;
- generating at least one longitudinal slit (7) extending from one endface of the sliding layer (4) to the other endface or at least one longitudinal parting (7a) whilst leaving an elastic web (23) in the form of a skin (24) during or after the production of the sliding layer (4);
- sheathing the inner sliding layer (4) lying on or applied to the core (1) or a core part (1a), with the outer carrier (6) of either hard or soft-elastic polymer, the conduct of the process and/or the construction of the inner sliding layer (4) and of the outer carrier (6) being chosen in such a way that the inner sliding layer (4) is connected in self-substance and/or positively to the outer carrier (6); and
- the longitudinal slits (7) or longitudinal partings (7a) becoming filled with the material of the carrier (6);
- stripping the sheathed and inherently stabilized sliding bearing (8) from the core (1 or 1a) and subsequently discarding the latter.

2. A method as in Claim 1, characterized in that in the case of only partial separation of the sliding layer (4) the web or webs remaining at the parting or partings (7a) is/are made as membrane (24).

3. A method as in Claim 2, characterized in that the thickness of the membrane or membranes (24) is dimensioned at less than one millimetre.

4. A method as in Claim 1, characterized in that the separating slit or slits (7) and if necessary also the partition or partitions (7a) is/are arranged at an acute angle to the axis (R) of rotation.

5. A method as in Claim 4, characterized in that the acute angle (α) is dimensioned between 5° and 30°.

6. A method as in one of the Claims 1 to 5, characterized in that the carrier (6) is made of at least two layers (6.1; 6.2; 6.3) of alternately hard and softly elastic polymer, applied alternately one above the other and connected in self-substance and/or positively together or vice versa.

7. A method as in Claim 6, characterized in that the innermost layer (6.1) and the outermost layer (6.2 or 6.3) of the carrier (6) are produced from a hard polymer.

8. A method as in Claim 6, characterized in that the innermost layer (6.1) and the outermost layer (6.2 or 6.3) of the carrier (6) are produced from a softly elastic polymer.

9. A method as in one of the Claims 1 to 8, characterized in that in the production of the sliding layer (4) mouldings (12 or 13) are provided on and/or in its outer face (11).

10. A method as in one of the Claims 1 to 9, characterized in that the sliding layer (4) is moulded around by the carrier (6) up to its sliding face (14) next the axis (R) of rotation (Figure 12).

11. A method as in one of the Claims 1 to 9, characterized in that onto at least one endface (15 and/or 16) of the sliding layer (4) a flange (17 or 18) pointing radially outwards is moulded, the face or faces of which pointing axially outwards are not moulded round by the material of the carrier (6) (Figure 13).

12. A method as in one of the Claims 1 to 9, characterized in that the carrier (6) and sliding layer (4) are so associated with one another that they terminate flush with one another at at least one endface (22) (Figure 14).

13. A method as in one of the Claims 1 to 12, characterized in that for the carrier (6) or at least for the or one intermediate carrier layer (6.1, 6.2, 6.3) consisting of hard polymer a material is employed which is provided with an about 5% to 80% fibrous and/or particulate and/or spherical mineral, organic or inorganic proportion of filler.

14. A method as in one of the Claims 1 to 13, characterized in that as the carrier (6) coaxially surrounding the sliding layer (4) or as the intermediate carrier layer (6.1, 6.2, 6.3) directly touching the sliding layer (4) over at least part of the area, one of lubricant-containing or lubricant-carrying polymer material is employed.

15. A method as in Claim 14, characterized in that the lubricant-carrying carrier (6) or one of the lubricant-carrying intermediate carrier layers (6.1, 6.2, 6.3) may be relubricated from outside.

16. A method as in Claim 14 or 15, characterized in that the lubricant from the lubricant-carrying carrier (6) or from the lubricant-carrying intermediate carrier layers (6.1, 6.2, 6.3) is delivered through the separating slit or slits (7).

17. A slide bearing in the form of a sleeve, produced according to the method according to one or more of the Claims 1 to 16, characterized in that the slide layer (4) consists of one of the polymeric materials polyethersulphone, polyetherketone, polyamideimide or polyetherimide with a thickness of layer of up to about 3 mm.

18. A slide bearing in the form of a sleeve as in Claim 17, characterized in that the sliding layer (4) is surrounded by at least two intermediate carrier layers (6.1, 6.2, 6.3) of alternately hard or softly elastic polymers, applied alternately one above the other.

19. A slide bearing in the form of a sleeve as in Claim 17 or 18, characterized in that the remaining thickness of the membrane (24) or the nonexistence of a membrabe (24) serves as an indicator of wear.

## Revendications

1. Procédé de fabrication d'un palier lisse (8) en forme de douille ayant une surface lisse regardant vers l'axe de rotation (R), une couche de glissement (4) constituée d'un matériau polymère possédant de bonnes propriétés de glissement, produite selon un procédé de technique de matière plastique et un support (6) entourant cette couche de glissement en matériau également polymère, palier dans lequel la couche de glissement (4) possède par rapport au support (6) un évidement (7, 7a) qui s'étend parallèlement à l'axe de rotation (R), évidement qui est rempli par le matériau du support, caractérisé par l'utilisation conjointe des étapes de procédé suivantes :
- production d'une couche de glissement(4) mince, intérieure, à base d'un premier matériau polymère, sur un noyau (1) par un processus de moulage par transfert de moulage par extrusion ou de moulage par injection - soufflage ;
- utilisation d'un matériau pour la couche de glissement (4) sans ajout de substances de remplissage abrasive, fibreuse, en forme de billes et/ou en forme de particules ;
- création d'au moins une rainure longitudinale (7) qui s'étend d'une face frontale à l'autre face frontale de la couche de glissement (4) ou d'au moins un joint de séparation longitudinal (7a) tout en laissant une traverse élastique (23) sous la forme d'une pellicule (24) lors de ou après la production de la couche de glissement (4) ;
- revêtement de la couche de glissement (4) intérieure qui se trouve ou qui a été appliquée sur le noyau (1) ou sur une partie du noyau (la) avec le support (6) extérieur en polymère soit dur, soit souple, la conduite du processus et/ou la construction de la couche de glissement (4) intérieure et du support (6) extérieur, étant choisie(s) de telle sorte que la couche de glissement intérieure (4) se raccorde avec le support extérieur (6) en liaison de substance et/ou par la forme et la ou les rainures longitudinales (7) ou le ou les joints de séparation (7a) longitudinaux étant remplis avec le matériau du support (6),
- repousser le palier lisse (8) revêtu et stabilisé quant à la forme, du noyau (1 ou 1a) et l'éjecter ensuite de celui-ci.

2. Procédé selon la revendication 1, caractérisé en ce que dans la séparation seulement partielle de la couche de glissement (4), la ou les traverse(s) qui demeure(nt) sur le ou sur les joint(s) de séparation (7a) est ou sont formées sous forme de voile (24).

3. Procédé selon la revendication 2, caractérisé en ce que l'épaisseur du voile ou des voiles (24) est mesurée comme plus faible qu'un millimètre.

4. Procédé selon la revendication 1, caractérisé en ce que la ou les rainues de séparation (7), le cas échéant aussi le(s) joint(s) de séparation (7a) est ou sont disposé(s) à angle aigu par rapport à l'axe de rotation (R).

5. Procédé selon la revendication 4, caractérisé en ce que l'angle aigu (α) est mesuré entre 5 et 30°.

6. Procédé selon l'une des revendications 1 à 5, caractérisé en ce que le support (6) est formé d'au moins deux couches appliquées l'une au-dessus de l'autre, alternativement(6.1 ; 6.2 ; 6.3), et/ou reliées ensemble par une liaison de produit et/ou par la forme en polymère dur et élastique alternativement ou inversement.

7. Procédé selon la revendication 6, caractérisé en ce que la couche la plus intérieure -6.1) et la couche la plus extérieure (6.2 ou 6.3) du support sont fabriquées à base d'un polymère dur.

8. Procédé selon la revendication 6, caractérisé en ce que la couche la plus intérieure (6.1) et la couche la plus extérieure (6.2 ou 6.3) du support (6) sont fabriquées en polymère élastique et souple.

9. Procédé selon l'une des revendications 1 à 8, caractérisé en ce que lors de la fabrication de la couche de glissement (4) des moulages en relief et/ou des moulages rentrants (12 ou 13) sont prévus sur leurs surfaces extérieures (11).

10. Procédé selon l'une des revendications 1 à 9, caractérisé en ce que la couche de glissement (4) est formée autour par le support (6) jusque sur sa face de glissement (14) tournée vers l'axe de rotation (R) (figure 12).

11. Procédé selon l'une des revendications 1 à 9, caractérisé en ce que sur au moins une des faces frontales (15 et/ou 16) de la couche de glissement (4), une bride radiale tournée vers l'extérieur (17 ou 18) est moulée en relief, dont la (les) face(s) tournées axialement vers l'extérieur n'est pas ou ne sont pas formées par le matériau du support (6) (figure 13).

12. Procédé selon l'une des revendications 1 à 9, caractérisé en ce que le support (6) et la couche de glissement (4) sont disposés l'un par rapport à l'autre de telle sorte qu'ils se terminent au moins sur une face frontale (22) à fleur l'un avec l'autre (figure 14).

13. Procédé selon l'une des revendications 1 à 12, caractérisé en ce que pour le support (6) ou pour au moins la couche intermédiaire de support (6.1 ; 6.2 ; 6.3) ou pour une couche intermédiaire de support constituée de polymère dur, on utilise un matériau, pourvu d'une quantité de substance de remplissage, minérale ou organique, ou inorganique, à environ 5 à 80 % fibreuse et/ou en forme de particules et/ou en forme de billes.

14. Procédé selon l'une des revendications 1 à 13, caractérisé en ce que comme support (6) qui entoure coaxialement la couche de glissement (4) ou comme (4), une couche intermédiaire de support (6.1 ; 6.2 ; 6.3) qui touche directement au moins partiellement en surface la couche de glissement (4), on utilise un des matériaux polymères contenant des lubrifiants ou conduisant des lubrifiants.

15. Procédé selon la revendication 14, caractérisé en ce que le support (6) qui conduit du produit lubrifiant ou une des couches intermédiaires de support (6.1 ;6.2 ; 6.3) qui conduisent de l'agent lubrifiant est/ou sont graissables ultérieurement de l'extérieur.

16. Procédé selon la revendication 14 ou 15, caractérisé en ce que l'agent lubrifiant du support (6) qui conduit l'agent lubrifiant ou les couches intermédiaires de support (6.1 ; 6.2 ; 6.3) qui conduisent l'agent lubrifiant est délivré à travers la ou les rainures de séparation (7).

17. Palier lisse en forme de douille fabriqué conformément au procédé selon l'une ou plusieurs des revendications 1 à 16, caractérisé en ce que la couche de glissement (4) est constituée d'un des matériaux polymères polyéthersulfone, polyéthercétone, polyamideimide, ou polyéthérimide avec une épaisseur de couche allant jusqu'à environ 3 mm.

18. Palier lisse en forme de douille selon la revendication 17, caractérisé en ce que la couche de glissement (4) est entourée d'au moins deux couches intermédiaires de support (6.1 ; 6.2 6.3) appliquées les unes au-dessus des autres alternativement, à base de polymères alternativement durs ou élastiques.

19. Palier lisse en forme de douille selon la revendication 17 ou 18, caractérisé en ce que l'épaisseur restante du voile (24) ou bien le manque d'un voile (24), sert comme indication de l'usure.
